# EUROPEAN PATENT APPLICATION

(11) **EP 0 756 956 A1**
(43) Date of publication of application: **05.02.1997**
(21) Application number: 96902450.4
(22) Date of filing: 16.02.1996
(51) Int. Cl.: B60J 10/00, B29C 47/02

(54) **MOLDING FOR AUTOMOBILES AND METHOD AND APPARATUS FOR MANUFACTURING THE SAME**

(30) Priority: 17.02.1995 JP 53185/95
(71) Applicant: TOKAI KOGYO KABUSHIKI KAISHA, Ohbu-shi, Aichi 474 (JP)
(72) Inventor: HIGUCHI, Kazuyoshi, Tochigi 329-11 (JP); KOJIMA, Tadashi, Ohbu-shi, Aichi 474 (JP)
(74) Representative: Schwabe - Sandmair - Marx
(86) International application number: JP9600335
(87) International publication number: WO9625299

(57) **Abstract**

A holding portion (122c) made thicker outwardly of a molding (12) is integrally provided, and a direction in which the holding portion (112c) is made thicker is seat outwardly of the molding (12), thereby making it possible to install an extrusion molding device means for increasing the thickness in a space corresponding to the exterior of an edge portion, whereby it is possible to manufacture simply and excellently a molding that can provide a good mounting condition independently without employing other members such as a spacer and a stabilizer.

## Description

### Technical Field

The present invention relates to a molding for automobiles including a seal member fitted in a gap between a vehicle body panel and a windshield pane, and to a method and an apparatus for manufacturing the same.

### Background Art

In general, various kinds of moldings are fitted in gaps between vehicle body panels and windshield panes of an automobile. For example, a window molding incorporating a seal member is fitted to the peripheral edge part of a windshield pane attached to an window opening in a vehicle body panel. More specifically, leg parts of a window molding are inserted in a continuous elongated gap defined between the peripheral edge of a windshield pane and the window opening of the vehicle body panel, and a decorative seal member is connected to the outboard side ends of the leg parts so as to cover the gap outside of the vehicle body.

Further, a seal member of a door molding or a weatherstrip is attached to a peripheral edge of a door outer panel corresponding to a waist line or a sash part so as to be elastically made into contact with the outer surface of a windshield pane.

However, a conventional molding for automobiles incorporating such a seal member, has a weak rigidity or a low posture holding ability, and accordingly, it offers such a problem that a positional deviation or a deformation when fitting the molding is likely to occur. For example, in the case of the window molding, a positional deviation widthwise of a windshield pane with respect to a window opening in a vehicle body panel, a collapsing deformation at the curved corner section is likely to occur. Further, in the case of a door molding, a positional deviation or a deformation of a seal member would occur being caused by a displacement of a windshield pane during using thereof. This positional deviation or a deformation of a molding causes problems such that a seal member externally protrudes or an apparent width of the molding varies, and further, estimation of a load upon the seal member can hardly be found.

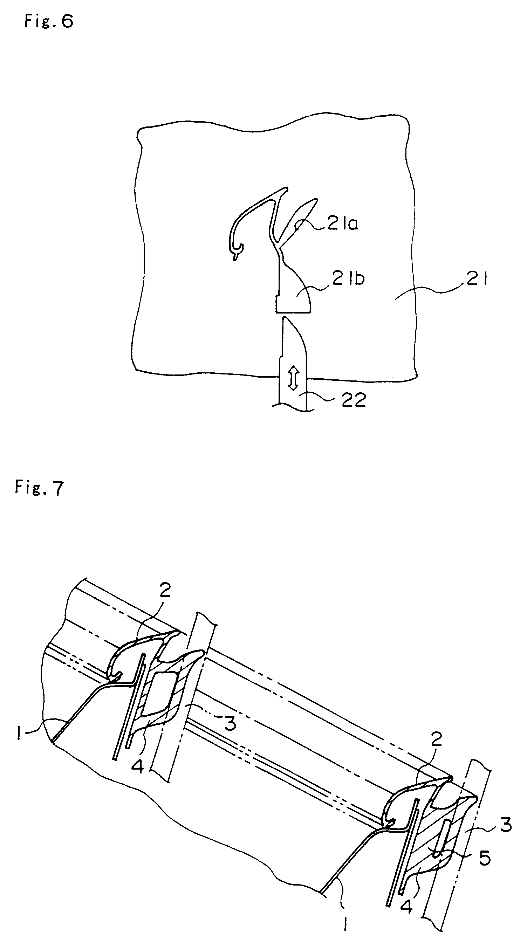

In order to eliminate this problem, a molding has been usually reinforced with the use of a spacer or a stabilizer. However, Japanese Laid-Open Patent No. 6-48172 and the like proposes an arrangement which can eliminate such a reinforcing member. In this arrangement, as shown in Fig. 7, a molding body 2 adapted to be fitted to a vehicle body panel 1 side, and a seal member 4 adapted to elastically make contact with the outer surface of a windshield pane 3 are separately extruded in synchronization with each other, that is, a movable die in a extrusion molding device which is not shown is moved for extruding the molding body 2 and the seal member 4, separately, in order to form thick wall holding parts 5 at predetermined positions in the longitudinal direction of the molding body 2 or the seal member 4, and finally the molding body 2 and the seal member 4 are integrally bonded together.

However, in this proposal a special extruding device is required in order to finally bond the molding body 2 and the seal member 4 with other, and a complicated manufacturing process is also required although the molding can be reinforced without using a spacer, a stabilizer or the like.

Accordingly, an object of the present invention is to provide a molding for automobiles, and a method of and an apparatus for manufacturing the same which can solely exhibit a satisfactory attached condition without using a spacer, a stabilizer or the like, and which can be simply and satisfactorily manufactured.

### Disclosure of the Invention

In order to achieve the above-mentioned object, in a molding for automobiles, according to the present invention, comprising a long band-like molding body attached to a vehicle body panel so as to cover, outside of a vehicle body, a gap between the vehicle body panel and a windshield pane, a seal member protruding from the molding body so as to elastically contact with the outer surface of the windshield pane in order to block the gap, the seal member has a holding part which is formed by integrally increasing the wall thickness of the seal member outward of the molding, at a predetermined position in the longitudinal direction.

Further, in a method, according to the present invention, of manufacturing a molding for automobiles, comprising a long length molding body adapted to be attached to a vehicle body panel so as to cover a gap between the vehicle body panel and a windshield pane on an outboard side, and a seal member projected from said molding body as to elastically make contact with an outer surface of the windshield pane in order to block the gap, characterized in that the method includes the steps of forming said seal member with a holding part by increasing a wall thickness of the seal member in the outward direction perpendicular to the longitudinal direction, and providing the holding member at a predetermined position in the longitudinal direction of the molding.

Further, in an apparatus, according to the present invention, for manufacturing a molding for automobiles, comprising an extrusion molding port for extrusion-molding a long band-like molding body adapted to be attached to the vehicle body panel so as to cover a gap between a vehicle body panel and a windshield pane, outside of the vehicle body, an extrusion molding port for extrusion molding a seal member protruding from the molding body so as to elastically make contact with the outer surface of the windshield pane in order to block the gap, the extrusion molding port for the seal member has a molding die which enlarges at a predetermined timing, in a direction corresponding to the outward direction of the molding so as to integrally form a thick wall holding part.

With the measures having the above-mentioned arrangement, since the wall thickness of the holding part is integrally and continuously increased along the longitudinal direction of the seal member, and the increasing direction of the wall thickness is set outward of the molding, a means for increasing the wall thickness outward of the molding, can be arranged outward of the molding, and accordingly, the molding body and the seal member can be integrally extruded, simply and satisfactorily.

That is, according to the present invention, since the holding part whose wall thickness increases gradually from the center part toward outer edge parts in the widthwise direction of the molding, is integrally provided, and the direction of increasing the wall thickness of the holding part is set outward of the molding so that extrusion molding device and measures for the thickness part can be set in a space part corresponding to the outward direction of the molding, a molding which can solely obtain a satisfactory attached condition without using a spacer, a stabilizer or the like, can be simply and satisfactorily manufactured.

### Brief Description of the Drawings

Fig. 1 is an external perspective explanatory view illustrating a side part of an automobile to which the present invention is applied;
Fig. 2 is a sectioned perspective explanatory view illustrating an attachment structure of a door belt molding in an embodiment of the present invention;
Fig. 3 is an enlarged side view illustrating the door belt molding shown in Fig. 2;
Fig. 4 is a cross-sectional view along line IV-IV line in Fig.3;
Fig. 5 is a cross-sectional view along line V-V in Fig. 3;
Fig. 6 is a front explanatory view illustrating a structure of a die forming device (die) for extruding the door belt molding shown in Fig. 3; and
Fig. 7 is a sectioned perspective explanatory view illustrating an attachment structure of a conventional door belt molding.

### Best Modes for Carrying Out the Invention

Explanation will be hereinbelow made of an embodiment in which the present invention is applied to an automobile door molding, with reference to the drawings.

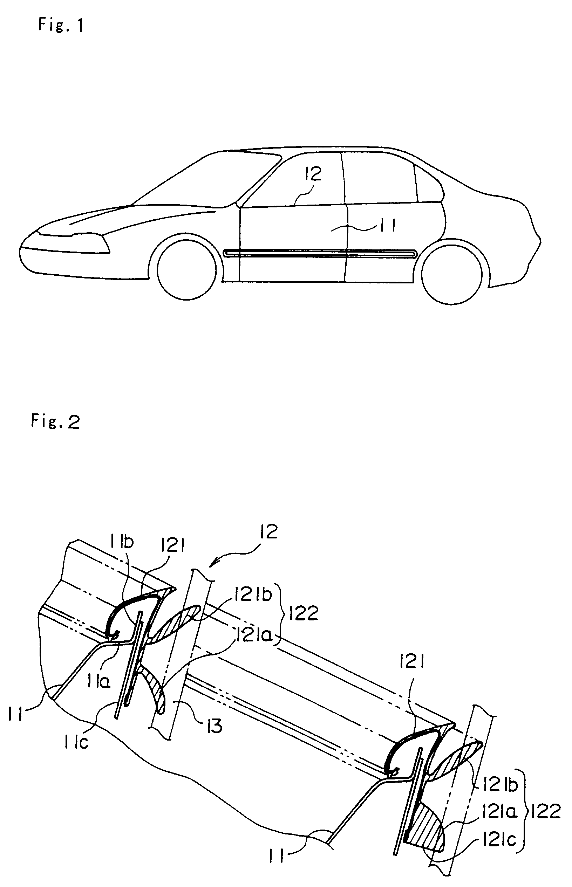

At first, as shown in Fig. 1, a door belt molding 12 is attached to a door outer panel 11 of an automobile along a waist line thereof. In more detail, as shown in Fig. 2, a windshield pane 13 is held on the inside of the door outer panel 11 so as to be vertically movable, a door belt molding 12 formed of a long band-like extruded member is attached to the upper edge part of the door outer panel 11 corresponding to the waist line.

The upper edge part of the door outer panel 11 corresponding to the waist line, is bent toward the passenger compartment so as to form a step-like shape, and a flange part 11b extending upward is provided through the intermediary of a bent wall 11a to the bent edge part. A lining plate 11c is laid inside of the door outer panel 11, and the upper edge part of the lining plate 11c makes inward contact with the upper edge part of the flange part 11b. Further, the door belt molding 12 is attached so as to cover the superposed parts of the flange part 11b and the lining plate 11c on the upper side thereof.

The door belt molding 12 is composed of a molding body 121 for covering the superposed parts of the flange part 11b and the lining panel 11c on the upper side, and a seal member 122 protruding inward from the molding body 121 to the windshield pane 13, which are integrally incorporated with each other.

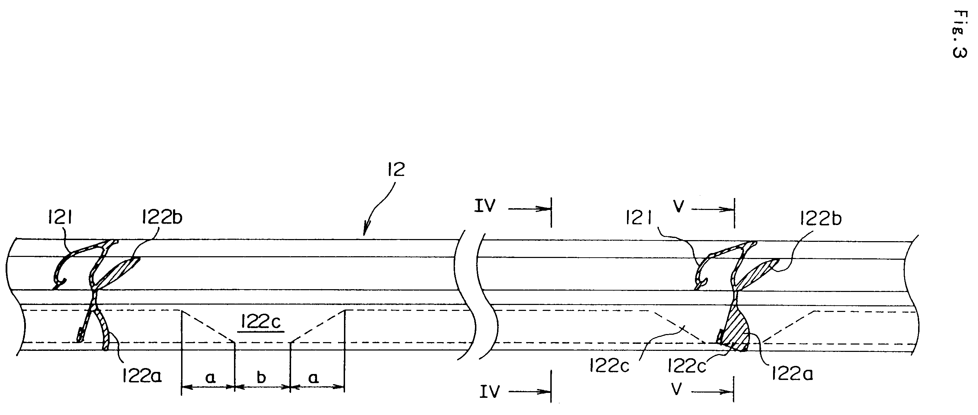

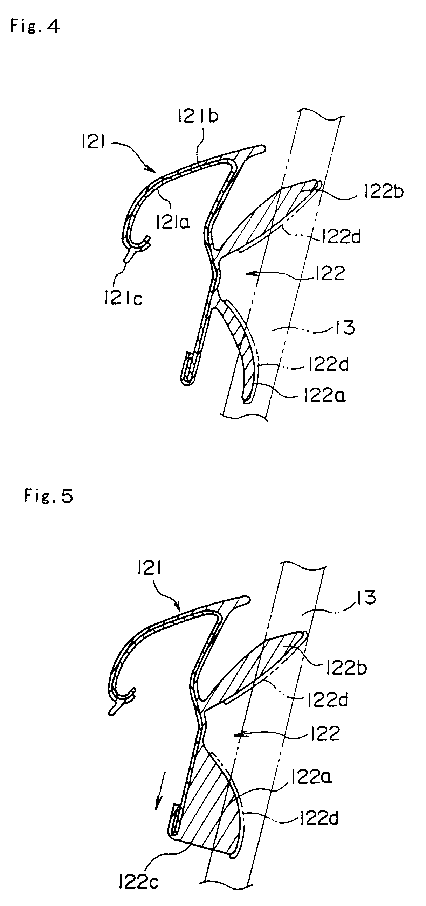

In particular, as shown in Figs. 3 to 5, the molding body 121 is composed of a predetermined resin member 121b which is attached to a surface of a long metal core 121a formed in a C-like cross-sectional shape, with the use of the flange part 11b of the door outer panel 11 as a reference position. An end lip 121c formed in the end edge part on the outside (the left side in Fig. 4) of the molding body 121 is provided so as to be made into press contact with the bent wall 11a of the door outer panel 11.

Meanwhile, the seal member 122 is composed of a pair of lip-like members 122a, 122b which extend being separated from each other from the center part toward opposite edge parts in the widthwise direction (vertical direction as viewed). Further, the respective extending front end parts of the lip-like members 122a, 122b are elastically made into contact with the outer surface of the windshield pane 13 through the intermediary of flocked bristle 122d, 122d shown by two-dot-chain lines, and accordingly, a gap with respect to the outer surface of the windshield pane 13 is blocked.

In this arrangement, of both lip-like members 122a, 122b, the lip-like member 122b on the upper side (upper side as viewed) is formed so as to have a uniform cross-sectional shape through the entire length of the molding. Meanwhile, the other lip-like member 122a (lower side as viewed) has holding parts 122c formed by increasing the wall thickness of the lip-like member 122a and arranged at a plurality of positions in the longitudinal direction.

Each of the holding parts 122c has a wall thickness which is gradually increased from the center part and outward of an edge part in a downward direction as viewed, widthwise (vertical direction as viewed) of the molding, as shown by the arrow in Fig. 5, and on the contrary, the wall thickness is gradually decreased toward the center part again, from the outside of the edge part on the lower side as viewed. For example, the wall thickness is gradually increased or decreased in two sections as shown by sections (a) in the longitudinal direction in Fig. 3, and a maximum wall thickness condition is held in a section (b) interposed between both sections (a, a).

In thus constituted embodiment, since the increasing direction of the wall thickness of the holding part 122c in which the wall thickness of the lip-like member 122a is integrally and continuously increased along the longitudinal direction of the seal member 122 is set in a direction outward of the edge of the molding, an extrusion device or means for increasing the wall thickness can be set in a space part corresponding to the outside of the edge part, and accordingly, the molding body 121 and the seal member 122 are integrally extruded, simply and satisfactorily, by the extruding device and means. Explanation will be hereinbelow made of an extrusion die device and a molding method for integrally and continuously molding the large wall thickness holding parts 122c.

The extrusion die device shown in Fig. 6 has a first die 21 and a second die 22 arranged in parallel with each other in the direction of extruding molding (perpendicular to the paper), and the first die 21 is stationary while the second die 22 is reciprocally moved in a vertical direction as viewed at the front surface side of the first die 21. Further, the second die 22 may be arranged so as to make contact with the front surface of the first die 21, or may be separated therefrom with a predetermined space in the extruding direction.

Further, an extrusion molding port 21a for molding the above-mentioned door belt molding 12 is formed in the first die 21. The extrusion-molding port 21a is formed in an opening shape corresponding to the cross-sectional shape of the door belt molding 12 as a whole, and in particular as shown in Fig. 5, it is formed in an opening shape corresponding to a cross-sectional shape including the large thickened holding part 122c, having an expanded zone 21b corresponding to the holding part 122c having a maximum wall thickness.

Meanwhile, the second die 22 is adapted to be reciprocally moved so as to come into and away from a part corresponding to the inside of the expanded zone 21b in the extrusion molding port 21a of the first die 21. Further, the front end part on the entering side of the second die 22 is formed in a triangular peak shape, having slope side parts which define the outside (downward as viewed) wall surface of the lip-like member 122a. Accordingly, when the second dies 22 is reciprocally moved in a vertical direction as viewed, the wall thickness of the lip-like member 122a varies toward the end edges of the molding in the widthwise direction.

In order to extrusion-mold the door belt molding 12 with the use of the thus arranged dies, at first, the second die 22 is held in such a condition that second die 22 comes in the expanded zone 21b of the extrusion molding port 21a formed in the first die 21, in the upward direction as viewed in Fig. 6, by a maximum degree. According to the above-mentioned extrusion, the molding having a cross-sectional shape shown in Fig. 4, and the lip-like part 122a of the seal member 122 has a minimum thickness.

Thus, when the door belt molding 12 having the small wall thickness lip-like part 122a is extrusion-molded by a predetermined length, the second die 22 is started to retract downward as viewed in Fig. 6, so as to gradually come away from the expanded zone 21b of the extrusion-molding port 21a formed in the first die 21. Accordingly, the lip-like part 122a is gradually thickened from the center to the edge part in the widthwise direction of the molding part, and accordingly, the formation of the holding part 122c is started.

Further, after the section indicated by (a) on one side in Fig.3 is extruded, the second die 22 is completely separated from the expanded zone 21b of the extrusion molding port 21a formed in the first die 21 so as to come into a condition as shown in Fig. 6, and at this time, the formation of the holding part 122c having the maximum wall thickness shown in Fig. 5 is started. The holding part 122c having the maximum wall thickness is formed extending in a section indicated by (b) in Fig. 3.

Further, thereafter, the second die 22 is again advanced upward in Fig. 6, entering the expanded zone 21b of the extrusion molding port 21a formed in the first die 21, and accordingly, the lip-like part 122a is started to be gradually decreased in its wall thickness from the edge part to the center part in the widthwise direction of the molding. Further, the holding part 122c disappears over the section indicated by (a) on the other side in Fig. 3.

The formation of such a holding part 122c is repeated several times with predetermined timing while the entire molding is extruded, and accordingly, the holding part 122c is integrally formed at several positions in the longitudinal direction of the door belt molding 12.

Further, in another embodiment of the present invention, it is considered that a lip-like part is formed in an end edge part of a molding, and the wall thickness of this lip-like part is increased in the thicknesswise direction of the molding so as to form a holding part in the lip-like part in the end edge part. Also in this embodiment, the wall thickness increasing direction of the holding part which is formed by integrally and continuously increasing the wall thickness of the lip-like part is set outward of the molding, and accordingly, an extrusion device and means for forming the thickness part can be set in a space part corresponding to the outward direction. Thus, the molding body and the seal member can be simply and satisfactory extruded by the extrusion molding device and means, integrally.

As mentioned above, the invention made by the inventors has been specifically explained in reference to the embodiments of the present invention, the present invention should not be limited to these embodiments, but it goes without saying that various modifications can be made thereto without departing the concept of the present invention.

### Industrially Applicability

The present invention can be similarly applied to several kinds of moldings such as a window molding, in addition to every door belt molding for automobiles, and is suitable for simply and satisfactorily manufacturing an automobile molding which can give a sole and satisfactory attached condition without use any other member.

## Claims

1. A molding for automobiles comprising a long length molding body adapted to be attached to a vehicle body panel so as to cover a gap between said vehicle body panel and a windshield pane on an outboard side, and a seal member projected from said molding body so as to elastically make contact with an outer surface of said windshield pane in order to block said gap, characterized in that:
said seal member has a holding part whose wall thickness is increased in an outward direction orthogonal to a longitudinal direction of said molding, and
said holding part is provided at a predetermined position in the longitudinal direction of said molding.

2. An automobile molding as set forth in claim 1, characterized in that the wall thickness of said holding part is increased in a widthwise direction orthogonal to the longitudinal direction of the molding.

3. A molding for moldings as set forth in claim 1, characterized in that the wall thickness of said holding part is increased in a thicknesswise direction orthogonal to the longitudinal direction of the molding.

4. A molding for automobiles as set forth in claim 1, characterized in that said seal member has at least a pair of lip-like members which are separated away from each other, outward from a center part to an edge part in the widthwise direction orthogonal to the longitudinal direction, and
at least one of said pair of lip-like members has said holding part.

5. A method of manufacturing a molding for automobiles comprising a long length molding body adapted to be attached to a vehicle body panel so as to cover a gap between said vehicle body panel and a windshield pane on an outboard side, and a seal member projected from said molding body so as to elastically make contact with an outer surface of said windshield pane in order to block said gap, characterized in that: said method comprising the steps of forming said seal member with a holding part by increasing a wall thickness of said seal member in the outward direction perpendicular to the longitudinal direction of the molding, and providing said holding member at a predetermined position in a longitudinal direction of said molding.

6. A method of manufacturing an automobile molding as set forth in claim 5, characterized in that the step of forming the seal member includes the step of forming said holding part so as to increase the wall thickness in a widthwise direction orthogonal to the longitudinal direction of said molding.

7. A method of manufacturing a molding for automobiles as set forth in claim 5, characterized in that the step of forming the seal member includes the step of forming said holding part so as to increase the wall thickness in a thicknesswise direction orthogonal to the longitudinal direction of said molding.

8. A method of manufacturing a molding for automobiles as set forth in claim 5, characterized in that the step of forming the seal member includes the step of forming at least a pair of lip-like members separating away from each other, outward from a center part to an edge part in the widthwise direction orthogonal to the longitudinal direction, and
forming at least one of said pair of lip-like members is formed with said holding part.

9. A method of manufacturing a molding for automobiles, in which a long length molding body adapted to be attached to a vehicle body panel so as to cover a gap between said vehicle body panel and a windshield pane on an outboard side, and a seal member projected from said molding body so as to elastically make contact with an outer surface of said windshield pane in order to block said gap, are extrusion-molded through extrusion molding ports formed in dies in an extrusion molding apparatus, characterized in that said method includes the steps of expanding said extrusion molding port for said seal member in a direction corresponding to an outward direction orthogonal to the longitudinal direction of said molding with predetermined timing so as to integrally form a holding part having a large wall thickness.

10. A method of manufacturing a molding for automobiles as set forth in claim 9, characterized in that the step of expanding said extrusion molding port includes the step of expanding said extrusion molding port in a widthwise direction orthogonal to the longitudinal direction of the molding so as to form said holding part having a large wall thickness.

11. A method of manufacturing a molding for automobiles molding as set forth in claim 9, characterized in that the step of expanding said extrusion molding port include the step of expanding said extrusion molding port in a thicknesswise direction orthogonal to the longitudinal direction of the molding so as to form the holding part having a large wall thickness.

12. An apparatus for manufacturing an automobile molding, comprising dies having an extrusion molding port for extrusion-molding a long length molding body adapted to attached to a vehicle body panel so as to cover a gap between said vehicle body panel and a windshield pane on an outboard side, and an extrusion molding port for extrusion-molding a seal member which is projected from said molding body so as to elastically make contact with an outer surface of said windshield pane in order to block said gap, characterized by a movable die which expands said extrusion molding port for said seal member in a direction corresponding to an outward direction orthogonal to a longitudinal direction of the molding with predetermined timing so as to integrally form a holding part having a large wall thickness.

13. An apparatus for manufacturing an automobile molding as set forth in claim 12, characterized in that said movable die is provided so as to reciprocally movable in order to expand the extrusion molding port in a widthwise direction orthogonal to the longitudinal direction of said molding for forming said holding part having a large wall thickness.

14. An apparatus for manufacturing an automobile molding as set forth in claim 12, characterized in that said movable die is provided so as to reciprocally movable in order to expand the extrusion molding port in a thicknesswise direction orthogonal to the longitudinal direction of said molding for forming said holding part having a large wall thickness.
